Europäisches Patentamt

European Patent Office

Office européen des brevets

(19)

(11) Veröffentlichungsnummer: **0 331 108**
**A2**

(12) # EUROPÄISCHE PATENTANMELDUNG

(21) Anmeldenummer: **89103499.3**

(22) Anmeldetag: **28.02.89**

(51) Int. Cl.4: **B23Q 11/00 , B23Q 17/24 , B23Q 3/18**

(30) Priorität: **04.03.88 DE 3807199**

(43) Veröffentlichungstag der Anmeldung:
**06.09.89 Patentblatt 89/36**

(84) Benannte Vertragsstaaten:
**DE FR GB IT**

(71) Anmelder: **Max Mayer Maschinenbau GmbH**
**Burlafingen**
**Flurstrasse 34**
**D-7910 Neu-Ulm(DE)**

(72) Erfinder: **Hiller, Hermann**
**Schulstrasse 25**
**D-7914 Pfaffenhofen(DE)**

(74) Vertreter: **Koch, Günther, Dipl.-Ing. et al**
**Kaufingerstrasse 8 Postfach 920**
**D-8000 München 2(DE)**

(54) **Verfahren und Vorrichtung zum Einrichten von Werkstücken.**

(57) Um die Plazierung von Werkstückhalterungen, beispielsweise Vakuumtellern, auf einem Maschinentisch zu erleichtern und eine Beschädigung der Halterungen beim anschließenden Bearbeitungsvorgang zu verhindern, wird auf dem Maschinentisch in natürlicher Größe das Werkstück in seinen Umrißlinien, gegebenenfalls mit weiteren Bearbeitungsstellen, derart projiziert, daß die Werkstückumrißlinie mit der Bahn zusammenfällt, die das Werkzeug bei dem späteren Bearbeitungsvorgang durchläuft. Die Halterungen bzw. die Vakuumteller werden innerhalb der Umrißlinien des projizierten Bildes plaziert und auf dem darübergeführten Werkstück werden die Umrißlinien sichtbar, so daß dieses Werkstück so plaziert werden kann, daß wenig Abfall entsteht.

Fig. 2

EP 0 331 108 A2

## Verfahren und Vorrichtung zum Einrichten von Werkstücken

Die Erfindung bezieht sich auf ein Verfahren und eine Vorrichtung zum Einrichten von Werkstücken zur maschinellen und/oder manuellen Weiterverarbeitung, insbesondere für spanabhebende Bearbeitungsmaschinen. Vorzugsweise befaßt sich die Erfindung mit dem Einrichten von flächigen Werkstücken auf dem Maschinenbett einer Bearbeitungsmaschine, bei der ein numerisch gesteuertes Fräsaggregat eine vorbestimmte Umrißlinie ausschneidet. Da das Fräsaggregat bei einem solchen Bearbeitungsvorgang auf seiner Bahn das Werkstück längs einer geschlossenen Profilkurve umfährt, kann das Werkstück nicht von oben und unten her gleichzeitig eingespannt werden, sondern die Werkstückhalter müssen von nur einer Seite her am Werkstück angreifen. Aus diesem Grunde werden für derartige Bearbeitungsvorgänge häufig Vakuumteller benutzt, die entweder im Maschinenbett in X- und in Y-Richtung verfahrbar sind und auf der Oberseite das Werkstück durch Ansaugen festlegen, oder es werden Vakuumteller benutzt, die auf beiden Seiten Saugnäpfe besitzen und durch Unterdruck einerseits am Maschinentisch und andererseits am Werkstück festgelegt werden.

Insbesondere bei Einzelanfertigungen, beispielsweise von Treppenwangen und Treppenstufen müssen der unterschiedlichen Umrißprofilform wegen die Vakuumteller nach jedem Arbeitsvorgang bzw. immer dann, wenn eine neue Form ausgefräst werden soll, erneut ausgerichtet werden. Dies geschieht bisher unter Verwendung von Zeichnungen oder nach Modellvorlage, nach denen die Vakuumteller ausgerichtet werden. Dieser Ausrichtvorgang ist zeitraubend und fordert umständliche Meß-und Vergleichsüberlegungen, wodurch die Standzeit einer automatisch durch Computer gesteuerten Maschine unbefriedigend lang wird.

Der Erfindung liegt daher die Aufgabe zugrunde, die Einrichtung der Werkstücke, insbesondere durch Vakuumtellerplazierung zu vereinfachen und zeitlich zu verkürzen.

Gelöst wird die gestellte Aufgabe verfahrensgemäß allgemein durch die im Kennzeichnungsteil des Patentanspruchs 1 angegebenen Merkmale. Durch die Erfindung wird erreicht, daß die Bedienungsperson ein Umrißbild zur Verfügung hat und die Vakuumteller oder andere Festlegemittel leicht innerhalb der Umrißlinien plazieren kann, wobei die Gewähr dafür gegeben ist, daß bei dem späteren Bearbeitungsvorgang die Vakuumteller nicht beschädigt werden bzw. der freie Lauf des Werkzeugs längs seiner Profilkurvenbahn nicht behindert wird. Der Vorteil der Erfindung wird besonders dann offenbar, wenn nacheinander Werkstücke unterschiedlicher Umrißform herzustellen sind, weil dann die Haltemittel innerhalb der neuen Projektionskontur leicht plaziert werden können. Voraussetzung ist natürlich, daß das Projektionsbild der Umrißlinie räumlich zusammenfällt mit der vom Werkzeug durchlaufenen Bahn. Dies läßt sich jedoch durch entsprechende Ausrichtung des Projektionssystems auf das Bearbeitungssystem (oder umgekehrt) relativ leicht erreichen.

Die Erfindung ist insbesondere für numerisch gesteuerte Werkzeugmaschinen zweckmäßig, bei denen Zeichnungen als NC-Programm von dem Fräsaggregat abgefahren werden können und die Zeichnungen daher nach Auslesen aus dem Programm von einem Plotter ausgedruckt werden können. Die so hergestellten Zeichnungen können mittels beliebiger Projektoren auf den Maschinentisch projiziert werden, wobei lediglich Abbildungsmaßstab und Abbildungslage genau eingestellt werden müssen.

Die Projektion kann insbesondere durch einen Overhead-Projektor erfolgen, der an einem Galgen über dem Maschinentisch ausschwenkbar ist. Anstelle transparenter Vorlagen wie Overhead-Folien oder Dia-Positive können beispielsweise mittels eines Episkops nicht transparente Vorlagen projiziert werden.

Gemäß einer weiteren Ausgestaltung der Erfindung können als Vorlagen auch Flachbildschirme dienen, die projizierbare Bilder liefern.

Durch die Erfindung wird es möglich an teuren Werkstoffen zu sparen, da der Zuschnitt, Verschnitt, das Zusammenrichten und Verleimen optimiert werden können.

Immer dann, wenn eine Computergraphik 2-dimensional besteht, läßt diese sich für einen separaten Arbeitsplatz im Sinne der Erfindung einsetzen. Alle Betriebe, die die Form von z.B. Holz, Schichtwerkstoff, Leder und Tuch oder Bleche aufgrund eines CAD Programms erarbeiten, können den Umriß auf den Tisch werfen, auf dem z.B. zugeschnitten, vernäht, verleimt oder sonst wie das Material zubereitet wird. Die Erfindung ist daher auch ohne zugeordnete Bearbeitungsmaschine vorteilhaft anwendbar.

Weitere zweckmäßige Ausgestaltungen des erfindungsgemäßen Verfahrens ergeben sich aus den Unteransprüchen 2 bis 5.

Vorrichtungsgemäß wird die gestellte Aufgabe gelöst durch die im Kennzeichnungsteil des Anspruchs 6 angegebenen Merkmale. Weitere Ausgestaltungen der Vorrichtung ergeben sich aus den Ansprüchen 7 bis 10.

Nachstehend werden Ausführungsbeispiele der erfindungsgemäßen Vorrichtung anhand der Zeichnung beschrieben. In der Zeichnung zeigen:

Fig. 1 eine schematische perspektivische Ansicht einer Werkstückbearbeitungsmaschine mit einem Fräsaggregat;

Fig. 2 eine schematische Darstellung der in Fig. 1 dargestellten Maschine mit der erfindungsgemäßen Projektionsvorrichtung;

Fig. 3 eine schematische Darstellung einer abgewandelten Ausführungsform der Projektionsvorrichtung.

In der Zeichnung ist eine CNC-Oberfräsmaschine (10) mit einem Maschinenbett (12) dargestellt, bei der als Werkzeug ein Fräsaggregat (14) vorgesehen ist, das numerisch über einen Computer gesteuert ein in vorbestimmter Weise profilliertes Werkstück (16) aus einer in der Zeichnung nicht dargestellten Platte ausfräst. Das Werkstück bzw. die Platte, aus der das Werkstück ausgefräst wird, muß während des Bearbeitungsvorganges durch Haltevorrichtungen im Abstand zum Maschinentisch (12) gehaltert werden. Dies geschieht nach dem Ausführungsbeispiel durch Vakuumteller (18), die auf beiden Seiten einen Unterdrucksaugnapf aufweisen und einerseits am Maschinentisch (12) und andererseits am Werkstück (16) festgelegt werden. Anstelle dieser sich beidseitig festsaugenden Vakuumteller kann auch ein Maschinenbett mit in diesem verankerten, in X- bzw. Y-Richtung verschiebbaren Vakuumtellern benutzt werden, die sich am Werkstück festsaugen und dieses im Abstand zum Maschinenbett halten.

Die Vakuumteller (18) sollen über die Fläche des fertigen Werkstücks (16) an diesem in einem genügend großen Abstand von der Randprofillinie angreifen, um zu verhindern, daß die Vakuumteller beim Bearbeitungsvorgang durch den Fräser beschädigt werden.

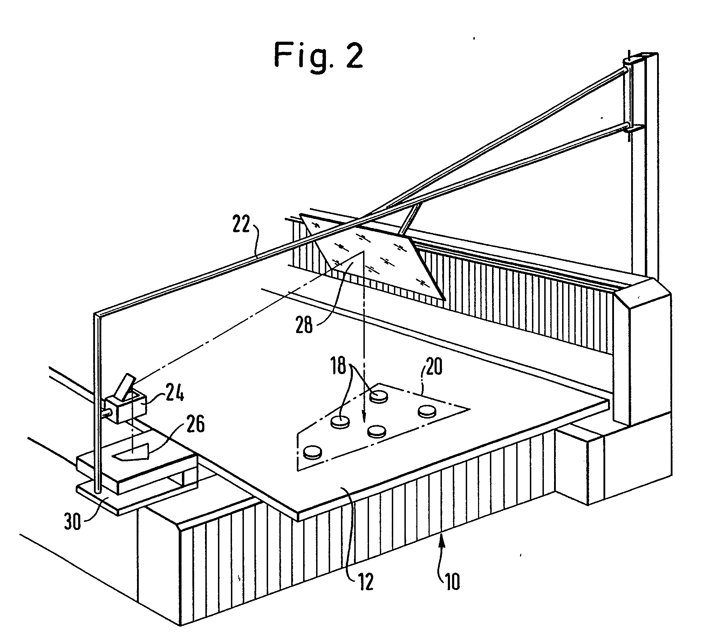

Um diese Arbeit des Einrichtens zu erleichtern ist ein Projektionssystem gemäß Fig. 2 vorgesehen. Dieses Projektionssystem erzeugt auf der Arbeitsfläche des Maschinentischs (12) ein Projektionsbild (20) des fertigen Werkstücks. Das Projektionsbild (20) entspricht in der Größe der Größe des fertigen Werkstücks, d.h. es wird vorzugsweise ein Abbildungsmaßstab von 1:1 gewählt. Aus Sicherheitsgründen könnte gegebenenfalls auch ein etwas verkleinertes Bild erzeugt werden, um einen gewissen Randabstand zu gewährleisten, selbst wenn die Vakuumteller bis zur Umrißlinie geführt werden.

Die Projektionseinrichtung muß so beschaffen sein, daß das Umrißbild des Werkstücks an der gleichen Stelle abgebildet wird, an der der Fräser die Bearbeitung am Werkstück durchführt, d.h. die vom Fräser durchlaufene Bahn muß mit der Umrißlinie des Umrißbildes (20) zusammenfallen bzw. einen vorbestimmten Randabstand hierzu aufweisen.

Nachdem das Umrißbild (20) auf dem Maschinentisch (12) abgebildet ist, können innerhalb der Umrißlinien dieses Werkstücks die Vakuumteller (18) mit Sicherheitsabstand zum Rand plaziert werden, ohne daß hierzu noch zusätzliche Berechnungen oder Überlegungen angestellt werden müßten. Auf die so eingerichteten Vakuumteller (18) wird dann das plattenförmige Werkstück aufgelegt. Da auch auf diesem plattenartigen Werkstück die Umrißlinien projiziert werden, kann dieses auf den Vakuumtellern so plaziert werden, daß ein möglichst geringer Abfall entsteht.

Gemäß dem Ausführungsbeispiel nach Figur 2 weist die Projektionssystem einen von einem Galgen (22) oder ähnlicher Vorrichtung getragenen Overhead-Projektor (24) auf, der die Vorlage (26) über einen am Galgen befestigten Umlenkspiegel (28) auf den Maschinentisch als Umrißbild (20) abbildet. Wenn lediglich, wie im Ausführungsbeispiel die äußeren Konturen durch den Fräser zu bearbeiten sind, genügt die Abbildung der Umrißformen, wobei der gesamte Umriß als Schattenbild ausgebildet sein kann. Wenn jedoch auch innerhalb der Umrißfläche des Werkstücks Arbeitsvorgänge, beispielsweise Bohrvorgänge zusätzlich auszuführen sind, dann können diese Stellen durch die Projektionseinrichtung ebenfalls markiert werden, so daß man beim Einrichten der Vakuumteller auch auf diese Bearbeitungsstellen Rücksicht nehmen kann.

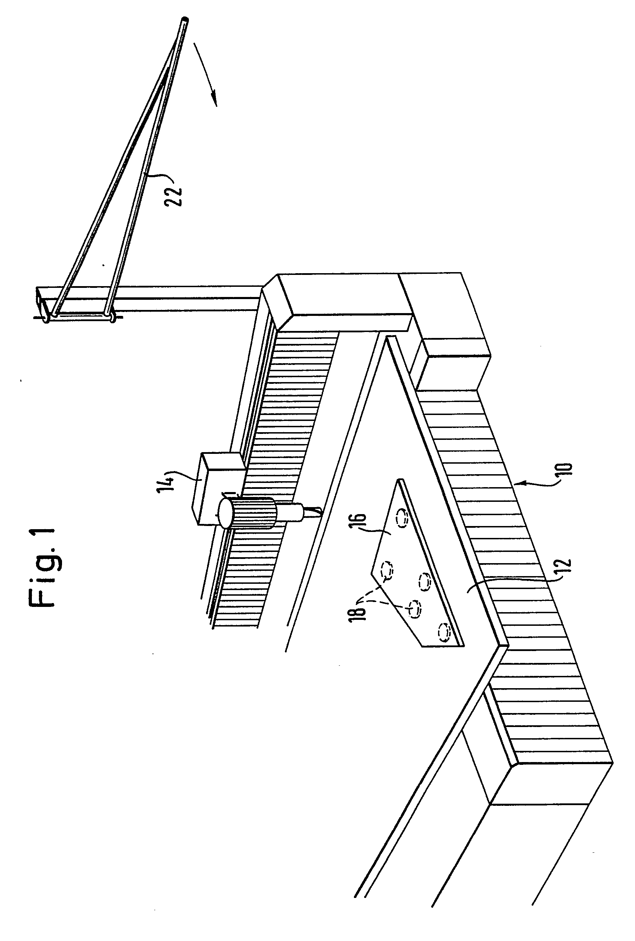

Der Galgen (22) oder eine ähnliche Vorrichtung ist schwenkbar und wird zweckmäßigerweise bei der Bearbeitung in die aus Fig. 1 ersichtliche Stellung ausgeschwenkt wenn die Maschine in Arbeitsposition befindlich ist.

Die Vorlagen-Auflagefläche (30) des Projektors besitzt zwei in der Zeichnung nicht dargestellte Fixpunkte, die beim Einschwenken des Galgens immer an der gleichen Stelle anschlagen. Wenn diese richtige Position erreicht ist, wird der Galgen bzw. der Overhead-Projektor zweckmäßigerweise durch einen Vakuumteller unverrückbar gehalten.

Voraussetzung für die Projektion ist, daß Zeichnungen oder Entwürfe vorliegen, die als NC-Programm von dem Fräsaggregat abgefahren werden. Dabei lassen sich insbesondere CAD-Ergebnisse, die von einem computergesteuerten Plotter geliefert werden und schon als Fräsprogramm im Computer eingegeben sind, als Folienvorlage über den Overhead-Projektor (24) darstellen.

Umgekehrt ist es möglich, Entwürfe zweidimensional im Maßstab 1:1 auf dem Tisch abzubilden, um z.B. in teach-in-Technik ein NC-Programm zu erzeugen.

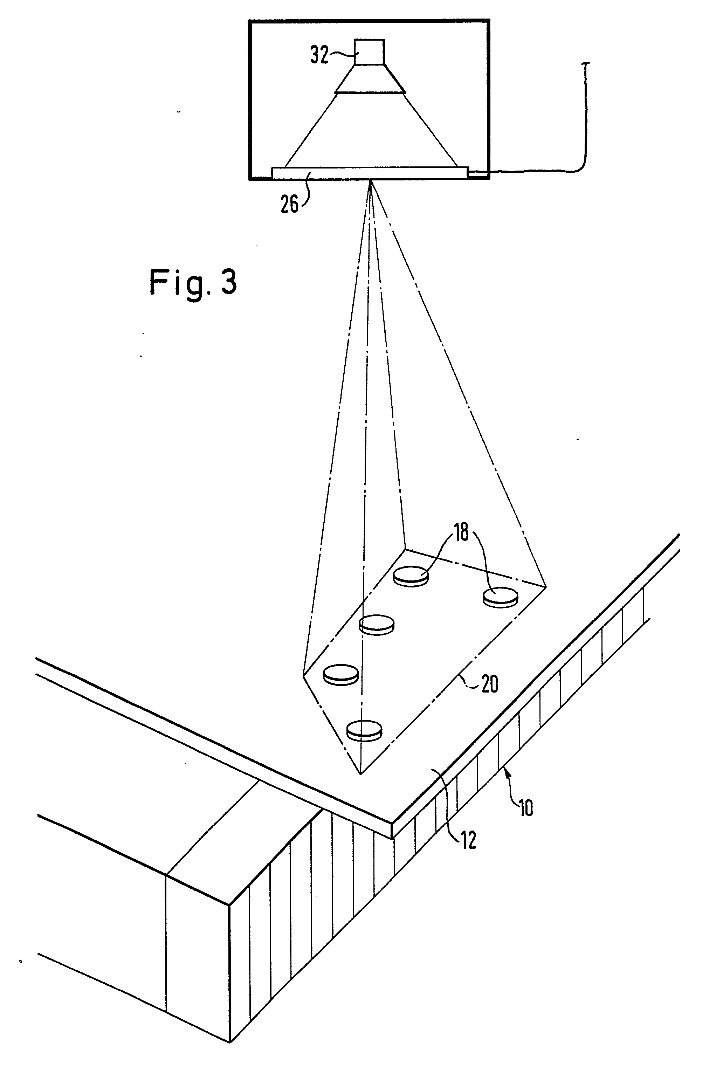

Als Vorlage (26) kann auch ein Flachbildschirm Verwendung finden, der den dem Programm entsprechenden Umriß unmittelbar darstellt. Derartige Flachbildschirme, die ein projizierbares Bild liefern, sind seit einiger Zeit in Flüssigkristall-Bauweise verfügbar. Eine solche als Flachbildschirm ausgebildete Vorlage (26) kann gemäß Fig. 3 auch direkt oder über einen Spiegel von einer Projektionslampe (32) auf den Maschinentisch (12) projiziert werden.

Die Erfindung wurde vorstehend in Verbindung mit einem Fräsaggregat beschrieben. Sie ist jedoch auch zum Einrichten von Werkstücken verwendbar, die anderen Bearbeitungsvorgängen unterworfen werden.

**Ansprüche**

1. Verfahren zum Einrichten von Werkstücken zur maschinellen und/oder manuellen Weiterverarbeitung, insbesondere für spanabhebende Bearbeitungsmaschinen,
dadurch gekennzeichnet, daß in den Bereich des zu bearbeitenden Werkstücks ein maßgetreues Bild (20) im wesentlichen mit den Abmessungen des fertigen Werkstücks (16) projiziert wird und daß die Einrichtung gemäß der Projektion derart erfolgt, daß das Bearbeitungswerkzeug automatisch oder durch Hand gesteuert frei an die zu bearbeitenden Stellen herangeführt werden kann.

2. Verfahren nach Anspruch 1 zum Einrichten und Aufspannen von plattenförmigen Werkstücken auf dem Maschinentisch (12) einer numerisch gesteuerten Fräsmaschine mittels Vakuumtellern, die innerhalb der Umrißprofillinie des Werkstückes an dieses angelegt werden,
dadurch gekennzeichnet, daß die Umrißprofillinie des Werkstücks räumlich deckungsgleich zu der vom Werkzeug (14) zu durchlaufenden Bahn auf den Maschinentisch (12) projiziert wird, daß die Vakuumteller (18) auf dem Maschinentisch (12) innerhalb der projizierten Umrißlinien plaziert werden und daß dann das Werkstück auf den Vakuumtellern abgesetzt wird, worauf auf diesem Werkstück die Umrißprofillinien sichtbar werden.

3. Verfahren nach den Ansprüchen 1 und 2,
dadurch gekennzeichnet, daß die Projektionsvorlagen (26) von dem die Maschine steuernden Programm abgeleitet werden.

4. Verfahren nach einem der Ansprüche 1 bis 3,
dadurch gekennzeichnet, daß die Projektion mittels eines Overhead-Projektors (24) erfolgt.

5. Verfahren nach einem der Ansprüche 1 bis 3,
dadurch gekennzeichnet, daß das auf einem Bildschirm vorzugsweise in Flachbauweise mit Flüssigkristallanzeige erzeugte Bild auf den Maschinentisch (12) bzw. Werkstück projiziert wird, wobei der Bildschirm die Fräskontur des das Werkzeug steuernden NC-Programms darstellen kann.

6. Vorrichtung zur Durchführung des Verfahrens nach einem der Ansprüche 1 bis 5,
dadurch gekennzeichnet, daß ein Projektionssystem vorgesehen ist, das das Bild (20) des fertigen Werkstücks (16) im wesentlichen in Originalgröße auf dem die Werkstückhalterungen tragenden Maschinentisch (12) abbildet.

7. Vorrichtung nach Anspruch 6,
dadurch gekennzeichnet, daß die Werkstückhalterungen von Vakuumtellern (18) gebildet sind, die innerhalb der projizierten Umrißlinien des Werkstücks auf dem Maschinentisch (12) ausrichtbar sind, wobei die Vakuumteller zweckmäßigerweise einerseits am Werktisch und andererseits am Werkstück festsaugbar oder auf dem Maschinentisch (12) verschiebbar gelagert sind.

8. Vorrichtung nach Anspruch 6,
dadurch gekennzeichnet, daß ein Overhead-Projektor (24) vorgesehen ist, der die Abbildung über einen über dem Maschinentisch-(12) angeordneten Spiegel (28) auf dem Maschinentisch (12) abbildet.

9. Vorrichtung nach Anspruch 8,
dadurch gekennzeichnet, daß der Overhead-Projektor (24) von einem ausschwenkbaren Galgen (22) getragen wird, der in Projektionsstellung durch Paßanschlüsse positionsmäßig festgelegt ist.

10. Vorrichtung nach Anspruch 6,
dadurch gekennzeichnet, daß das Projektionssystem einen Flachbildschirm aufweist, der die Fräskontur des CAD-Programms abbildet.

Fig. 1

Fig. 2

Fig. 3